# EUROPEAN PATENT SPECIFICATION

(11) **EP 0 680 689 B1**
(45) Date of publication and mention of the grant of the patent: **12.07.2000**
(21) Application number: 95201094.0
(22) Date of filing: 28.04.1995
(51) Int. Cl.: A01F 15/14

(54) **Twine cutting apparatus for round baler**
Bindegarn-Schneidvorrichtung für eine Rundballenpresse
Coupeur de fil pour presse à balles rondes

(30) Priority: 02.05.1994 US 236057; 02.05.1994 US 236833
(43) Date of publication of application: 08.11.1995
(73) Proprietor: NEW HOLLAND BELGIUM N.V., B-8210 Zedelgem (BE)
(72) Inventor: Wagstaff, Robert A., Lancaster, PA 17601 (US); McClure, John R., New Holland, PA 17557 (US)
(74) Representative: Vandenbroucke, Alberic

(56) References cited:
- US-A- 2 336 491
- US-A- 4 024 804
- US-A- 4 174 661
- US-A- 4 440 075
- US-A- 4 505 197
- US-A- 4 627 340
- US-A- 4 715 175
- US-A- 4 870 812
- US-A- 5 184 545
- US-A- 5 215 005
- US-A- 5 231 828

## Description

This invention relates generally to agricultural machines for making twine wrapped round bales, and more particularly to twine cutting apparatus for such machines.

Agricultural machines towed by a tractor across a field for picking up windrowed crop material to form a cylindrical bale are commonly referred to as round balers. These machines have either a fixed or an expandable bale forming chamber disposed between opposing vertical sidewalls. The chamber is usually defined by a floor and transverse confining means comprising a continuous flexible apron and/or a plurality of transverse rolls. Frequently the apron includes an array of side-by-side belts trained around a series of rollers that extend between the sidewalls, and the floor consists of either a large roller or a continuous conveyor belt.

During field operation, crop material such as hay is picked up from the ground and fed into the chamber. The volume of crop material increases continuously in the chamber until a compact cylindrical package is formed. The package is wrapped while still in the chamber and then ejected onto the ground as a completed bale.

Well known means for wrapping round bales include twine, net and plastic sheet material. When twine is used it is common to utilize a tube to dispense twine along the circumference of the formed package as it is being rotated in the chamber to helically wrap a continuous strand of twine around the bale. The twine tube is moved to feed out twine along a transverse path adjacent the outer surface of the cylindrical package as it is being turned in the chamber. Twine wrapping apparatus of this type is shown in US-A-5,215,005.

When a sufficient amount of twine has been wrapped around the package the twine is cut, typically by guiding the twine to a cutting mechanism which severs the strand by either a positive cutting action or by pulling it against a fixed cutting edge. Referring again to US-A-5,215,005, a stationary cutting mechanism is shown wherein the twine being dispensed is guided across a fixed striker plate and continues to feed out until a knife edge is thrust against the striker plate to severe the twine.

US-A-4,440,075 also shows a round baler having a twine wrapping mechanism cooperating with a stationary cutting mechanism. Here again, subsequent to wrapping, the twine is guided to the cutting mechanism and continuously dispensed from a twine arm. The twine is severed by pulling it against an exposed cutting edge.

In another prior art arrangement, shown in US-A-4,505,197, the twine cutting mechanism includes a swinging arm that engages the twine and pulls it against a knife. The arm in this device also serves to clamp the supply end of the twine after it is severed.

Another known approach in the round baler prior art is the use of a cutting mechanism that is not stationary. US-A-4,715,175 shows round bale wrapping apparatus in which a cutting mechanism is slideably moved to its cutting position after the wrapping operation is completed. In this embodiment the cutting mechanism is moved along a path adjacent and parallel to the entry gap for the twine.

As in all aspects of round balers, reliability is a very important factor in the twine cutting operation. Serious problems are encountered if the cutter fails, i.e., the twine has not been severed prior to ejection, or in some instances the twine continues to feed out long after a sufficient amount of twine has been wrapped around the package of crop material. Bad operation of the cutter may also result in an improperly formed twine tail that is not suitable for the next wrapping operation.

Due to the location of many prior art cutting mechanisms in an environment that is inherently dusty, failures occur due to build up of dirt and debris in the vicinity of the twine strand to be cut, causing the cutting edge to be blocked from contact or to make improper contact.

An important object of the present invention is to provide improved twine cutting apparatus for a round baler which enhances the reliability of the baler without affecting the overall performance.

In accordance with the present invention a round baler is provided comprising:
- a frame;
- a pair of sidewalls, affixed to said frame;
- a plurality of bale forming means, installed between said side walls and defining together therewith a baling chamber for forming a cylindrical package of crop material;
- a twine handling assembly mounted in the vicinity of a transverse opening between two of said bale forming means and comprising:
   means for feeding twine through said transverse opening and applying a plurality of wraps on the cylindrical package of crop material formed in said baling chamber; and
   twine cutting apparatus comprising:
      - a twine cutting mechanism having a cutting edge for cutting the twine; and
      - means for transferring said twine cutting mechanism from an inoperative position to an operative position.

Said round baler is characterized in that said transferring means for said twine cutting mechanism comprises means for transferring said cutting edge from an inoperative position remote from said transverse opening to an operative position closer to said transverse opening.

The twine handling assembly includes at least one twine arm having a twine dispensing end from which twine is dispensed in the vicinity of the opening, which may be the crop infeed opening, and fed therethrough for applying a plurality of helical wraps on the cylindrical package of crop material formed in the chamber. The baler further comprises twine cutting apparatus having a twine cutting mechanism for cutting the twine, and a twine guide assembly mounted on one of the side walls for guiding the twine to the cutting mechanism after a predetermined amount of twine has been dispensed. The present invention more specifically contemplates twine cutting apparatus in which means are provided for transferring the twine cutting edge from a remote inoperative position to an operative position adjacent the transverse opening.

The invention will now be discussed in greater detail with reference to the drawings in which:
Figure 1 is a diagrammatic side elevational view of a round baler in which the present invention is incorporated;
Figure 2 is a diagrammatic side elevational view, similar to Figure 1, of a round baler with its forming chamber in the full bale position;
Figure 3 is a view taken in the direction of arrows 3-3 in Figure 2;
Figure 4 is a view similar to Figure 3 and shows the twine dispensing arms extending rearwardly;
Figure 5 is also a view similar to Figure 3 and shows the twine cutting arms extending rearwardly;
Figure 6 is a view taken in the direction of arrows 6-6 in Figure 5;
Figure 7 is an enlarged view similar to Figure 6 illustrating the operative relationship of selected elements;
Figure 8 is a plan view of the twine cutting assembly of the present invention;
Figure 9 is a view taken in the direction of arrows 9-9 in Figure 8;
Figures 10A, 10C, 10E and 10G are side elevational views showing a sequence of the relative positions of various elements of the twine cutting mechanism of the present invention; and
Figures 10B, 10D, 10F and 10H are plan views corresponding to Figures 10A, 10C, 10E and 10G, respectively.

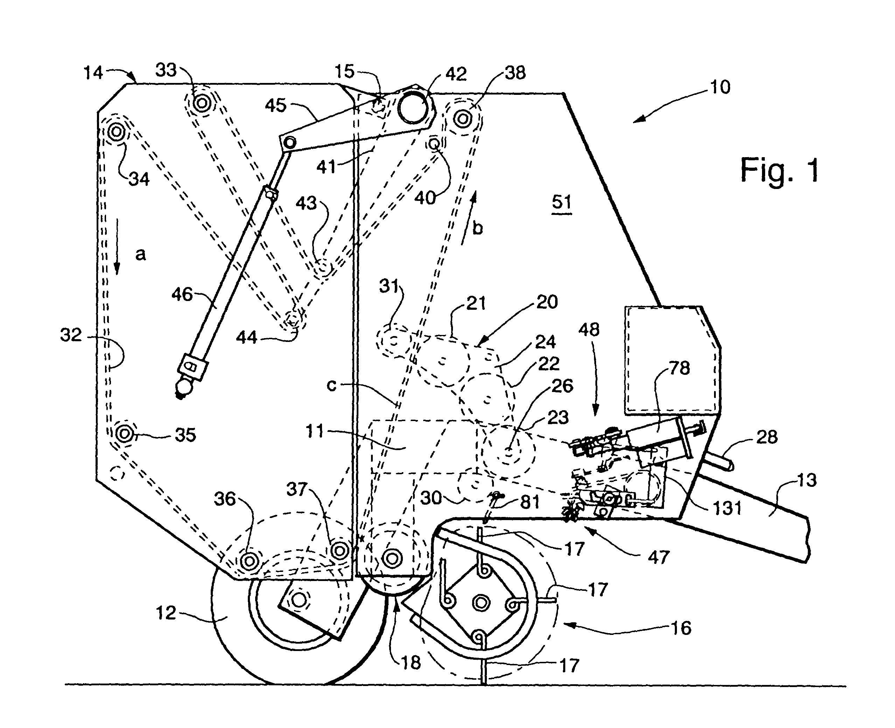

Figure 1 shows a round baler 10 of the type having an expandable chamber defined by belts and rollers, as generally disclosed in US-A-4,870,812.

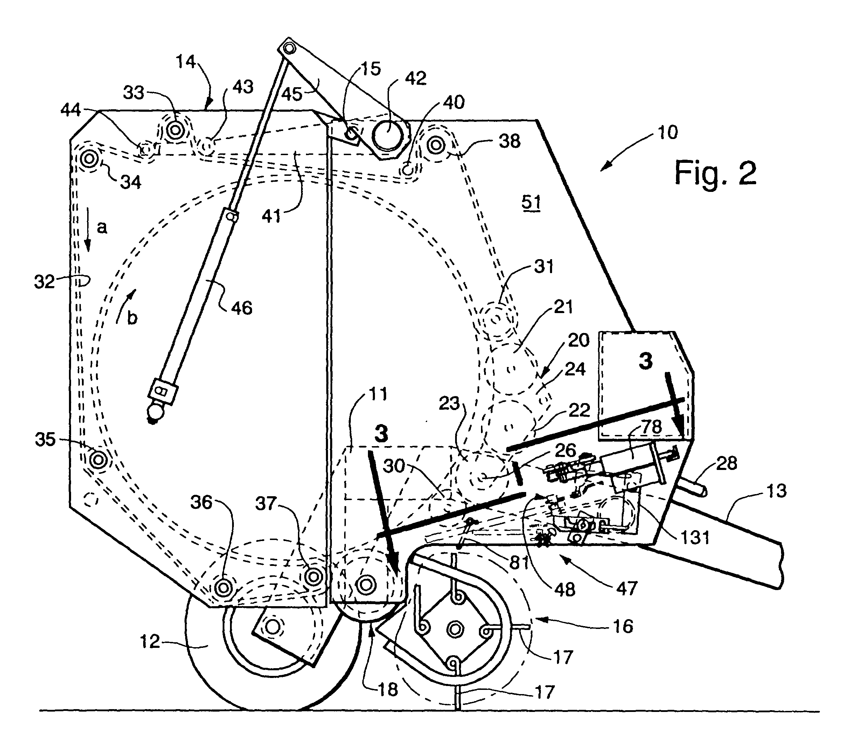

Round baler 10, which incorporates the preferred embodiment of the present invention, includes a main frame 11 supported by a pair of wheels 12 (only one shown). A tongue 13 is provided on the forward portion of main frame 11 for connection to a tractor. Pivotally connected to the sides of main frame 11 by a pair of stub shafts 15 is tailgate 14 which may be closed (as shown in Figures 1 and 2) during bale formation or pivoted open about stub shafts 15 to discharge a completed bale. A conventional pick-up 16, mounted on main frame 11, includes a plurality of fingers or tines 17 movable in a predetermined path to lift crop material from the ground and deliver it rearwardly toward a floor roll 18, rotatably mounted on main frame 11.

A chamber for forming bales is defined partly by a sledge assembly 20 comprising a plurality of rollers 21, 22, 23 extending transversely of the main frame 11 in the arcuate arrangement seen in Figure 1 and 2. Rollers 21, 22, 23 are journalled at their ends in a pair of spaced apart arms 24, one of which is shown. These arms are pivotally mounted inside main frame 11 on stub shafts 26 for providing movement of sledge assembly 20 between the bale starting position shown in Figure 1 and the full bale position shown in Figure 2. Rollers 21, 22, 23 are driven in a counter-clockwise direction by conventional means (for example, chains and sprockets) connected with a drive shaft 28 which in turn is connected to the power-take-off of a tractor. A starter roll 30, located adjacent roller 23, is also driven counter-clockwise. A freely rotatable idler roller 31, carried by arms 24, moves in an arcuate path with sledge assembly 20.

The bale forming chamber is further defined by an apron 32 comprising a plurality of continuous side-by-side belts supported by guide rolls 33, 34, 35, 36, 37 rotatably mounted in tailgate 14. Apron 32 is also supported on a drive roll 38, mounted on main frame 11. Although apron 32 passes between roller 21 on sledge assembly 20 and idler roller 31, it is in engagement only with idler roller 31 and not roller 21 which is located in close proximity to the apron belts and serves to strip crop material from the belts, in addition to its bale forming function. Suitable coupling means (not shown) connected to drive shaft 28 provide rotation of drive roll 38 in a direction causing movement of apron 32 along the varying paths indicated generally by arrows a and b in Figures 1 and 2. An additional guide roll 40 in the main frame 11 ensures proper driving engagement between apron 32 and drive roll 38. A pair of take up arms 41 (only one shown) are pivotally mounted on main frame 11 by a cross shaft 42 for movement between inner and outer positions shown in Figures 1 and 2, respectively. Belt tension lever arms 45 (one shown) are also mounted to pivot with take up arms 41, which carry additional guide rolls 43, 44 for supporting apron 32. A hydraulic cylinder 46 is mounted on tail gate 14 and normally urges lever arms 45 and take up arms 41 toward their inner positions (Figure 1), as the bale diameter increases.

When the elements of round baler 10 are disposed as shown in Figure 1 with tailgate 14 closed, an inner course c of apron 32 extends between guide roll 37 and idler roll 31. Rollers 21, 22, 23 are inclined rearwardly on sledge assembly 20 to define with course c the bale core starting chamber. Apron inner course c forms the rear wall of the chamber while the inwardly facing peripheral surfaces of rollers 21, 22, 23 define in a general manner a rearwardly inclined cooperating front wall. Floor roll 18 defines the bottom of the chamber and starter roller 30, spaced from floor roll 18, provides the upper boundary of an inlet for crop material.

As round baler 10 is towed across a field, pick-up tines 17 lift crop material from the ground and deliver it through the inlet. The crop material is carried rearwardly by floor roll 18 into engagement with apron inner course c (Figure 1) which urges it upwardly and slightly forwardly into engagement with rollers 21, 22, 23. In this manner crop material is coiled in a clockwise direction to start a bale core. Continued feeding of crop material into the bale forming chamber by pick-up tines 17 causes the apron inner course c to expand in length around a portion of the circumference of the bale core as the diameter increases. Take up arms 41 rotate conjointly with lever arms 45 from their inner positions shown in Figure 1 toward their outer positions shown in Figure 2 to provide for expansion of the inner course of the apron in a well known manner, i.e., in effect the outer course of the belts of apron 32 is diminished in length while the inner course increases a like amount. After a bale has been formed and wrapped, tailgate 14 is opened and the bale is ejected rearwardly. Subsequent closing of tailgate 14 returns the apron inner and outer courses of the belts of apron 32 to the locations shown in Figure 1.

During bale formation, sledge assembly 20 also moves between a bale starting position (Figure 1) to a full bale position (Figure 2). This movement of sledge assembly 20 causes idler roller 31 to move in an arcuate path while maintaining apron 32 in close proximity to roller 21, thereby allowing roller 21 to strip crop material from the belts of apron 32 and prevent or reduce significantly the loss of crop material between roller 21 and apron 32 during formation of a bale. Sledge assembly 20 is pushed outwardly towards its full bale position during bale formation as the crop material expands against rollers 21, 22, 23 and then subsequently is pulled inwardly by apron 32 to the position shown in Figure 1 during bale ejection.

Before turning to the twine cutting apparatus of the present invention, which apparatus is generally designated by reference numeral 47 in Figures 1 and 2, reference is made to US-A-5,184,545 which is directed to automatic twine wrapping apparatus, hereby incorporated by reference. This apparatus is similar to the twine wrapping apparatus 48 used in baler 10 and generally designated by reference numeral 48 in Figures 1 and 2.

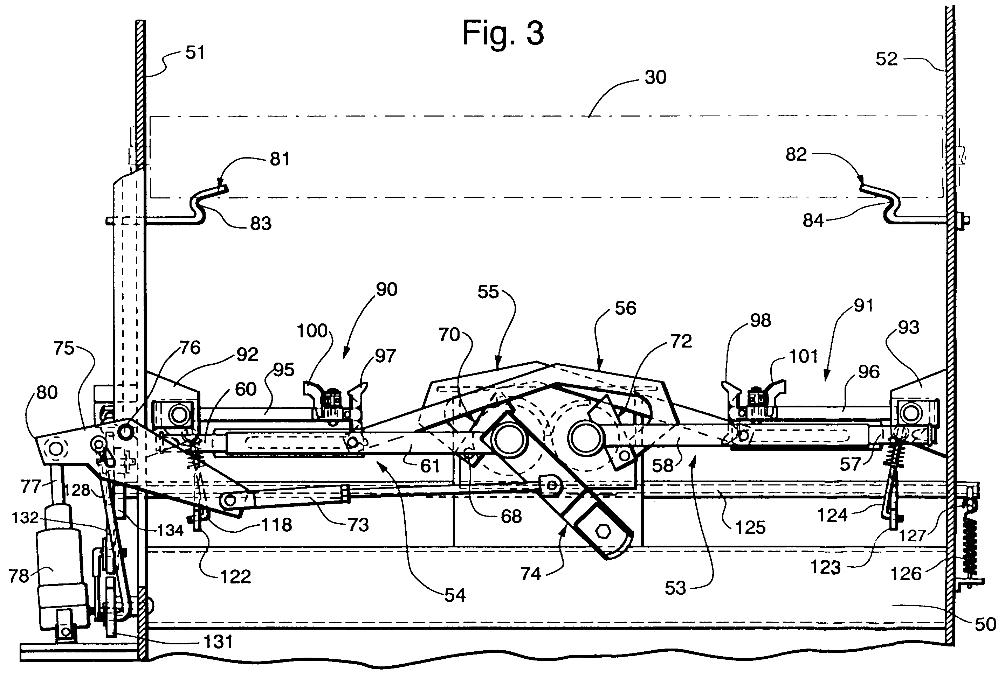

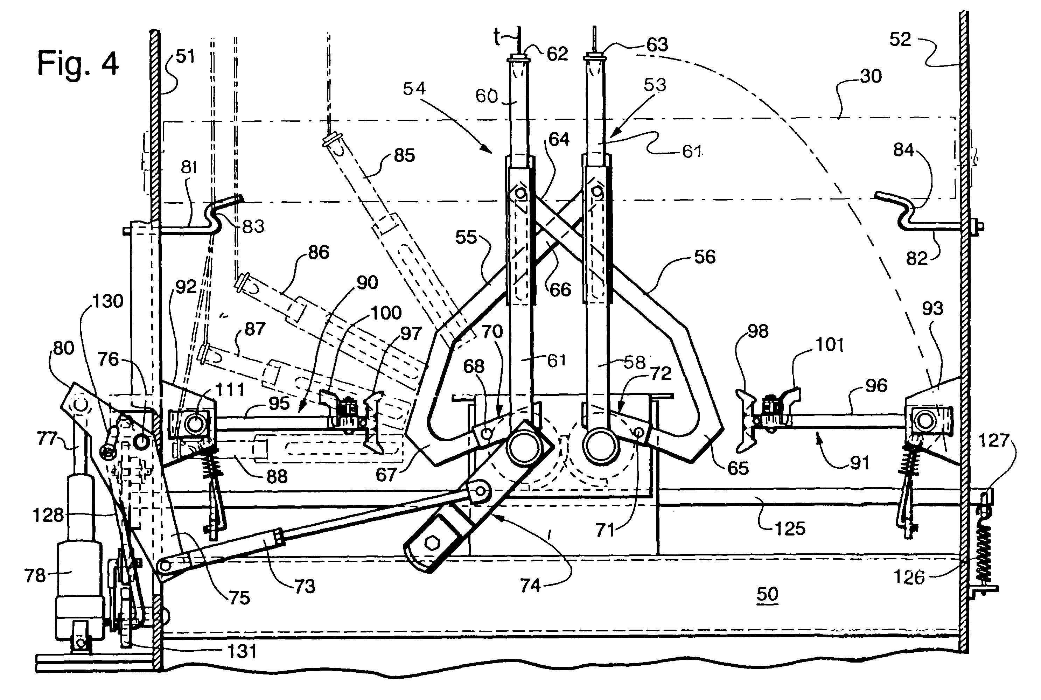

Now turning to Figures 3 and 4 for a detailed description of twine wrapping apparatus 48, a frame member 50, mounted between sidewalls 51, 52, supports a pair of twine arms 53, 54 shown in their home position in Figure 3 and in their rearwardly extended position in Figure 4. The arms, coupled together by first and second link members 55, 56, each comprise first and second members 57, 58 and 60, 61. The second members are each telescopically mounted within its corresponding first member, and a twine dispensing end 62, 63 is disposed at the outer ends of each of the second members. The link members 55, 56 have outer ends 64, 66 and inner ends 65, 67 (see Figure 4) whereby the outer end of each is pivotally coupled to the second member of one of the twine arms and the inner end is attached to the first member of the other twine arm. More specifically, first link member 55 comprises outer end 66 and inner end 67, the inner end of which is pivotally connected, via a pivot pin 68, to a rigid strap 70, which in turn is affixed to first member 58 of twine arm 53. Likewise, second link member 56 comprises outer end 64 and inner end 65, the inner end of which is pivotally connected, via pivot pin 71, to rigid strap 72, which in turn is affixed to first member 61 of twine arm 54.

Twine arm 54 is driven in a counter clockwise direction and twine arm 54 is driven in a clockwise direction when the driven link 73 urges link 74 from the position shown in Figure 4 to the position shown in Figure 3. Due to the unique coupling arrangement between the twine arms, which is shown and explained in detail US-A-5,184,545, the twine arms rotate from the position shown in Figure 4 to the position shown in Figure 3 with the second member of each arm retracting within the first member of each arm.

Driven link 73 is pivotally attached to plate 75, which is rotated about pivot 76 when actuator arm 77 (of actuator 78), affixed to plate 75 at end 80, reciprocates between the retracted and extended positions, shown in Figures 3 and 4. Thus, when actuator arm 77 is fully extended as shown in Figure 4, twine arms 53, 54 are in their rearwardly extending position, and when actuator arm 77 is in the retracted condition shown in Figure 3, twine arms 53, 54 are in their home position.

A pair of twine guides 81, 82, each of which is in the general configuration of an S shaped rod, extend inwardly from and are affixed to side walls 51, 52, respectively. These guides are positioned to receive the twine in bights 83, 84 as it is being dispensed from the twine arms to the ends of a round bale being wrapped in a customary fashion. Figure 4 depicts four partial phantom views, 85, 86, 87, 88 of twine arm 54 to illustrate the position of twine t relative to guide 81 as the twine approaches guide 81 (sequential positions 85 and 86) and is ultimately guided in bight 83 (position 87). Finally, twine t remains guided by bight 83 as twine arm is about to come to rest in its home position (position 88). A similar series of positions take place with respect to twine arm 53 and guide 82 when the twin twine arm system shown is employed.

Figures 3 and 4 show twine cutting assemblies 90, 91 in transversely oriented home positions, generally parallel to frame member 50. Even though a twin twine cutting arrangement is shown operative with twin twine dispensing arms, it should be clear that the present invention will function equally as well in a single twine arrangement. Accordingly, the following description will in some instances, for the sake of convenience, be directed only to twine cutting assembly 90, but it is the intention that it apply equally to twine cutting assembly 91.

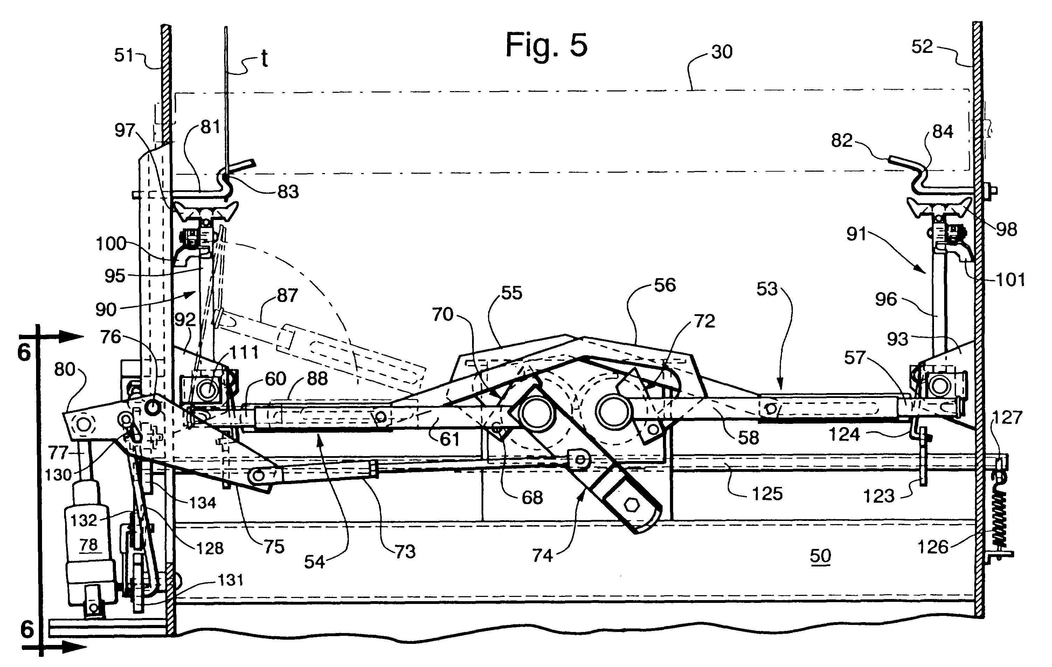

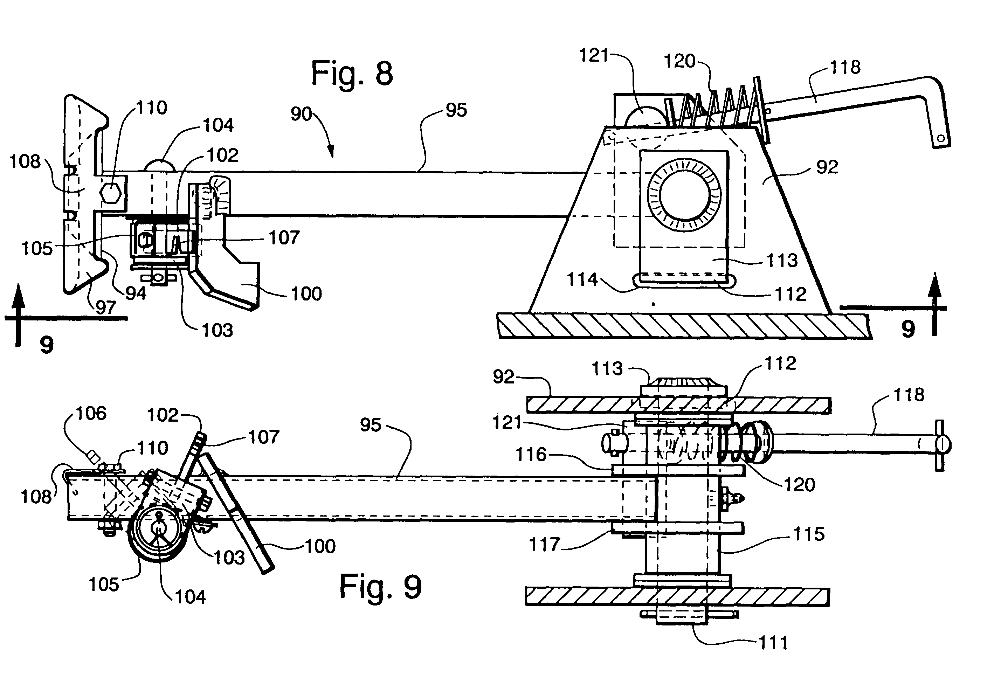

Twine cutting assemblies 90, 91 are pivotally mounted on brackets 92, 93, affixed and extending inwardly from side walls 51, 52, to permit reciprocative operation between the home positions shown in Figure 4 and the extended positions shown in Figure 5. Each assembly includes a knife 94 (see Figure 8) mounted on the outer end of a support arm 95, 96, first and second fixed twine guide plates 97, 98 and 100, 101, respectively, and a moveable twine guide plate 102, all of which plates operate in a manner described below to guide twine to the knife. As clearly shown in Figures 8 and 9, moveable twine guide plate 102, is pivoted with mounting block 103 via pin 104, and is urged into the position shown in solid lines by coil spring 105, wrapped around block 103 and secured to support arm 95. Block 103 is free to pivot about pin 104 to phantom position 106 (Figure 9) against the force of spring 105, i.e., when the force of spring 105 is overcome. A V shaped notch 107 in moveable twine guide plate 102 is positioned to be slightly above the top edge of fixed twine guide plate 100 under conditions where block 103 is urged into its rest position. The importance of notch 107 in moveable guide plate 102, as well as its shape, will become apparent in the description of the operation.

Again referring to Figures 8 and 9, knife 94 is illustrated as being held in a symmetrical bracket 108, the outer edge of which comprises first twine guide plate 97, affixed to the outer end of support arm 95 by bolt 110. The purpose of this unique shape is to permit the twine cutting assembly to be readily adapted for use on either side of the baler. Also, only half of the cutting edge of knife 94 is operative which leaves the other half available for use by simply loosening bracket 108 and reversing the position of the exposed ends of the cutting edge.

Twine cutting assembly 90 is pivotally mounted to bracket 92 via pin 111 secured to bracket 92 by flange 112 extending from securing plate 113 and affixed in slot 114. Support arm 95 is secured to sleeve 115 and rotates about pin 111 with sleeve 115 when movement is imparted via mounting shoulders 116, 117 attached thereto. Thus, when rod 118 is driven in a generally rearward direction it urges compressed spring 120 against vertical pin 121 and thereby rotates support arm 95 to the position shown in Figure 8 by virtue of the movement of pin 121 in an arcuate path counterclockwise about vertical pin 111, which moving pin is accommodated by appropriate holes in shoulders 116, 117 with diameters slightly greater than the diameter of such pin. Twine cutting assembly 90 is also shown in its extended position in Figure 5, whereas in Figure 4 it has been returned to its home position by rod 118.

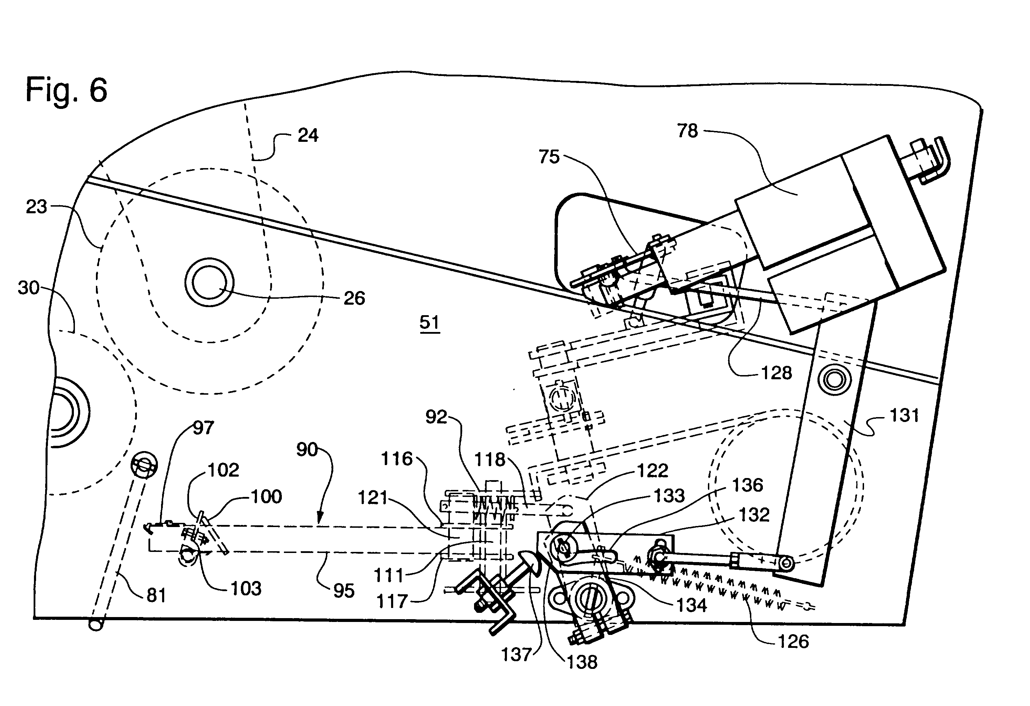

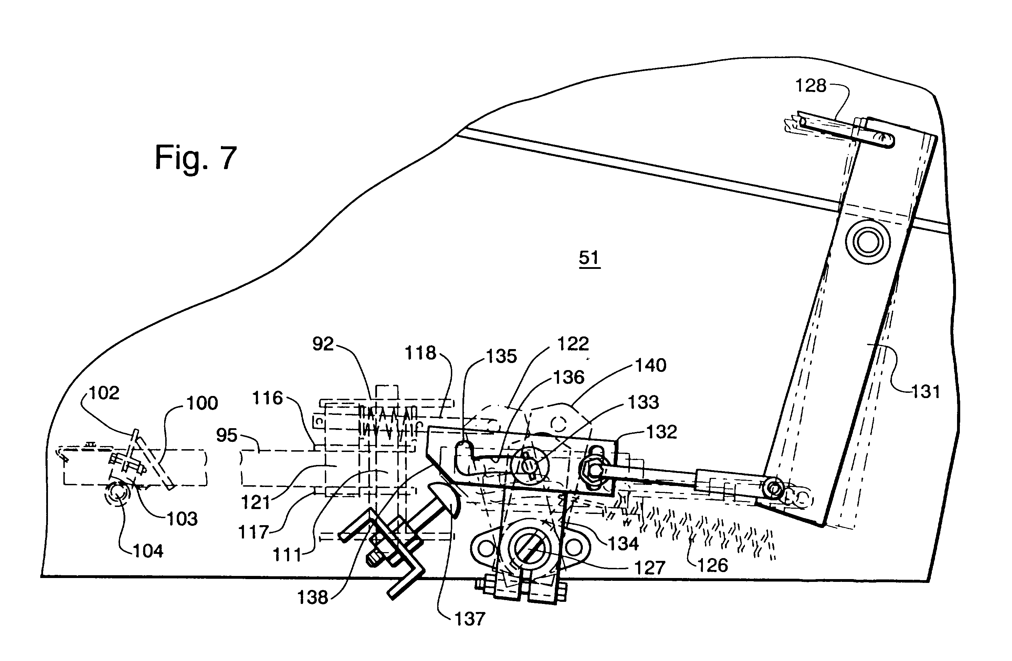

A pair of legs 122, 123, coupled to rods 118, 124, are attached to transverse drive rod 125 to move twine cutting assemblies 90, 91 from the home position (Figure 4) to the extended position (Figure 5) when transverse drive rod 125 is rotated to move the legs 122, 123 from right to left, as viewed in Figure 6, where leg 122 is shown. Drive rod 125 is urged in a clockwise direction by spring 126, which is under tension and maintains a torque on drive rod 125 via pin 127, as shown in Figure 7, to return the twine cutting assemblies to their home positions when drive rod 125 is released in a manner discussed below.

The drive arrangement for the twine cutting assemblies is synchronized with the drive arrangement for the twine arms, both of which are moved from home positions to operative positions and back to home by actuator 78. Initially actuator arm 77 is in the retracted position shown in Figure 3 and the twine dispensing arms 53, 54 and twine cutting assemblies 90, 91 are in their transverse home positions, substantially parallel to frame member 50. When plate 75 is pivoted to move the twine dispensing arms to the position shown in Figure 4, the twine cutting assemblies 90, 91 remain in the home position. During the latter part of the travel of twine dispensing arms 53, 54 through the positions shown in phantom in Figure 4, twine cutting assemblies 90, 91 are moved to their rearwardly extending positions shown in Figure 5 when actuator arm is retracted to the point where rod 128 is engaged by the rearward limit of lost motion slot 130.

Now turning to the specific details of the twine cutting assembly drive shown in Figure 6, rod 128 is moved to the right by plate 75 to cause leg 131 to pivot in a clockwise direction and move cutter drive plate 132 to the left. This in turn moves pin 133, extending from pivot arm 134, to the left along with leg 122 which is affixed to transverse drive rod 125. As leg 131 is continued in a clockwise direction by virtue of actuator arm 77, pin 133 is urged out of the detent portion 135 of slot 136 in cutter drive plate 132 by engagement of plow bolt 137 with the cam surface 138 of cutter drive plate 132. Leg 122 and pivot arm 134 are then free to rotate in a clockwise direction with transverse drive rod 125 under the force of spring 127, shown in more detail by the right most position 140 of leg 122 and pivot arm 134 in Figure 7, which returns twine cutting assembly 90 from the extended position (Figures 6 and 7) to its home position.

In operation, the twine cutting assembly 90 captures and cuts twine t, as it is held in position by twine guides 81, 82, during its travel from its home position to its fully extended position. Upon arrival of the twine cutting mechanism at its fully extended position, it is released and automatically returned to its home position. Thus the cutting mechanism is only in the vicinity of the bale forming environment during the very short period of time necessary to accomplish twine cutting.

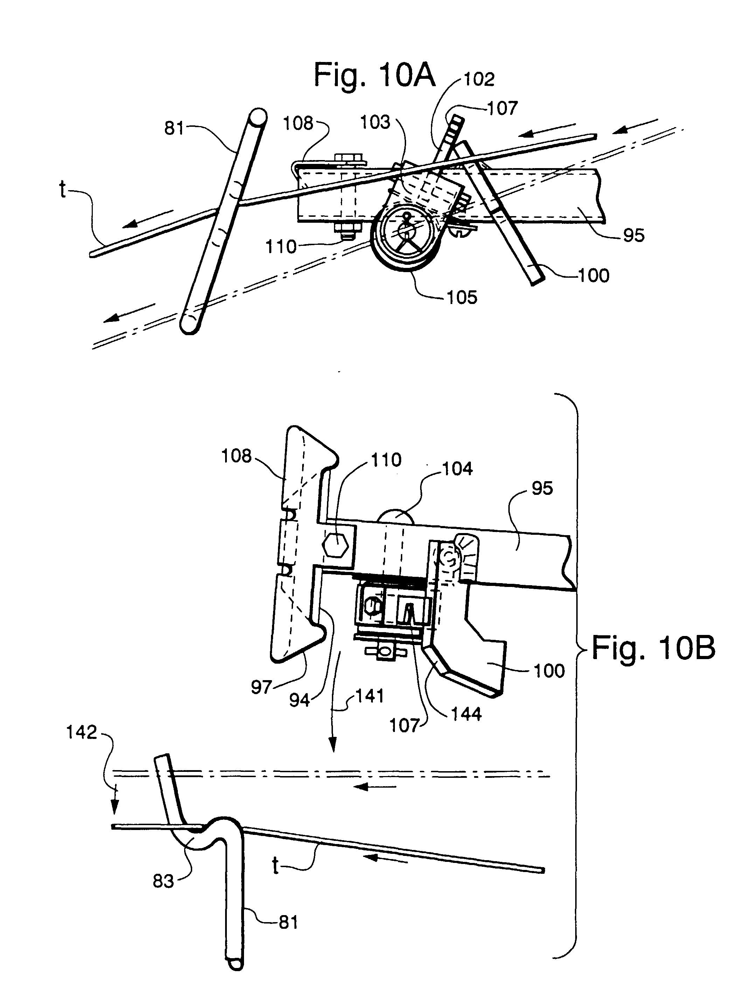

Now turning to the sequential views of Figures 10A through 10H for a more detailed description of the operation, twine t is shown travelling toward the bale being wrapped in the bale chamber defined by apron 32 (Figure 2). In Figures 10A and 10B the twine cutting assembly is shown as it is swinging in the direction of arrow 141 just prior to capturing twine t, and twine t is shown in phantom prior to being guided by bight 83 of guide 81, i.e., the path of travel of twine t is being shifted in the direction of arrow 142 by the swinging motion of the twine arm, as illustrated in Figure 4.

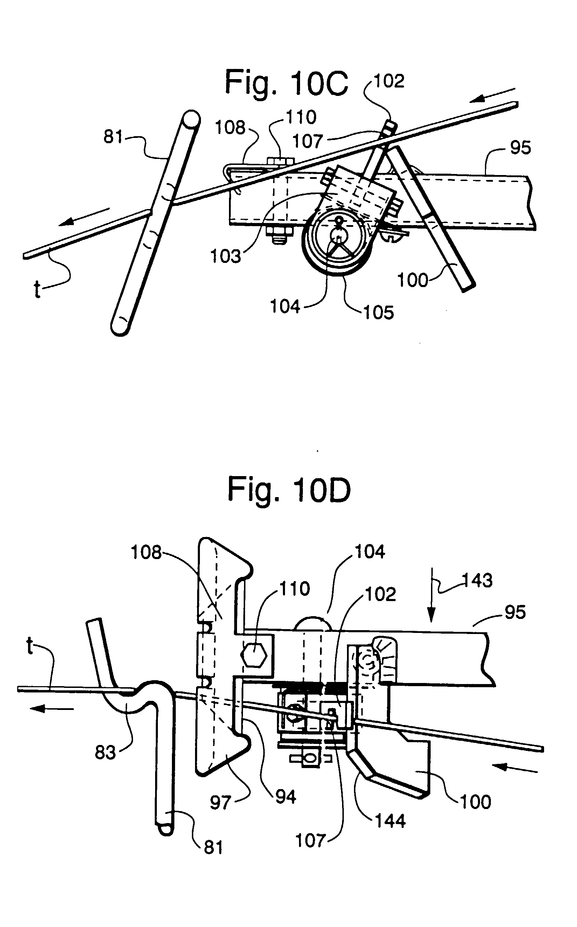

In Figures 10C and 10D the cutting assembly continues to swing in the direction of arrow 143 and has captured twine t which is still dispensing toward the bale chamber and is guided in bight 83. During the capturing process, moving twine t is engaged by second twine guide plate 100 (see relationship of twine and guide in Figure 10A) to guide the twine to the moveable twine guide plate 102, and first twine guide plate 97 if necessary, to assure that it rides up the slanted surface 144 of second guide plate 100 and into notch 107.

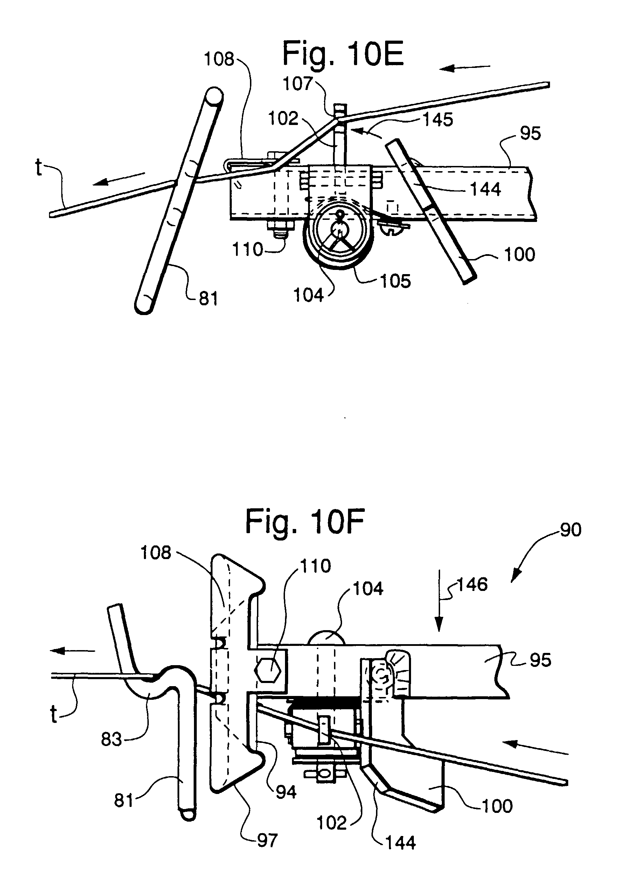

As twine t engages V shaped notch 107, moveable guide plate 102 begins to pivot (Figures 10E and 10F) in a counter clockwise direction (see arrow 145) by virtue of the frictional force imparted by the twine which is being pulled through the notch in the direction of the bale being wrapped. The twine path moves along the notch until it is firmly gripped by the sides of the notch to maintain pivotal motion. Twine cutting assembly 90 continues to swing in the direction of arrow 146 which motion, along with S shaped twine guide 81, assures that the twine will remain securely clenched by the V shaped notch 107 in guide 102.

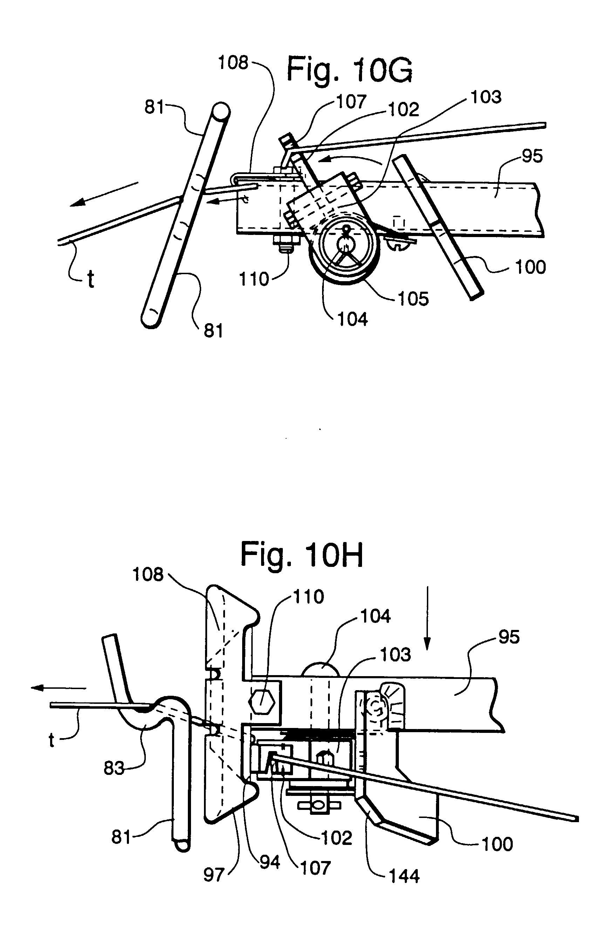

The angle between the twine t and knife 94 increases as moveable twine guide plate 102 continues to pivot from the position show in Figure 10E to the position shown in Figure 10G. This results in the twine being cut cleanly and decisively as it continues to be dispensed and pulled against and along the cutting edge as shown in Figure 10H. As soon as the twine has been cut (Figure 10G) the moveable twine guide plate 102 will return by spring 105 from the position shown in Figure 10G to the position shown in Figure 10A and twine cutting assembly will spring back to its home position as discussed above.

Among the many explicit and implicit advantages of the present invention is the ability of the twine cutting mechanism to use the force or energy in the moving twine to positively power the cutting action. This is a key advantage of the instant invention in that the force that is provided in this manner for cutting the twine can be quite high when needed, i.e., when a dull knife is being used or if tough twine is encountered. As mentioned above, many prior art systems depend on an auxiliary drive to power a knife or some require power to provide a clamping force against the twine. When the force is inadequate in these systems the cutting mechanism malfunctions. This type of malfunction is obviated by the present invention wherein the twine itself provides a force limited only by its own tensile strength.

## Claims

1. A round baler (10) comprising:
- a frame (11);
- a pair of sidewalls (51, 52), affixed to said frame (11);
- a plurality of bale forming means (18, 20, 30, 32), installed between said side walls (51, 52) and defining together therewith a baling chamber for forming a cylindrical package of crop material;
- a twine handling assembly (47, 48) mounted in the vicinity of a transverse opening between two of said bale forming means (18, 30) and comprising:
means (48) for feeding twine (t) through said transverse opening and applying a plurality of wraps on the cylindrical package of crop material formed in said baling chamber; and
twine cutting apparatus (47) comprising:
- a twine cutting mechanism (90) having a cutting edge (94) for cutting the twine (t); and
- means for transferring said twine cutting mechanism (47) from an inoperative position to an operative position;
characterized in that said transferring means for said twine cutting mechanism (47) comprises means for transferring said cutting edge (94) from an inoperative position remote from said transverse opening to an operative position closer to said transverse opening.

2. A round baler according to Claim 1 and wherein said means (48) for feeding twine (t) include at least one twine arm (54) having a twine dispensing end (62) which is movable between a dispensing start position proximate said transverse opening and a dispensing end position adjacent one of said side walls (51, 52),
characterized in that said twine cutting mechanism (90) is adjacent said one side wall (51), when in its operative position.

3. A round baler according to Claim 1 or 2, characterized in that said twine cutting apparatus (47) comprises stationary twine guiding means (81, 82) for guiding said twine (t) to the vicinity of said cutting edge (94).

4. A round baler according to Claim 3, when appended to Claim 2, characterized in that said stationary twine guiding means (81, 82) is affixed to one of said side walls (51, 52).

5. A round baler according to any of the preceding claims, characterized in that said twine cutting mechanism (90) comprises movable twine guiding means (97, 100, 102) for guiding said twine (t) to a position adjacent said cutting edge (94) after a predetermined amount of twine (t) has been dispensed.

6. A round baler according to Claim 5, when appended to claim 3 or 4, characterized in that said movable twine guiding means (97, 100, 102) guides the twine (t) to said cutting edge (94) after said stationary twine guiding means (81) has guided the twine (t) to the vicinity of the cutting edge (94).

7. A round baler according to Claim 5 or 6, characterized in that said movable twine guiding means (97, 100, 102) comprises lever means (102) for transferring the twine (t) from a position proximate the cutting edge (94) to a position against said cutting edge (94) to thereby severe said twine (t).

8. A round baler according to Claim 7, characterized in that said lever means (102) comprises a pivotable plate member (102) having a substantially horizontal twine receiving notch (107).

9. A round baler according to Claim 8, characterized in that:
the twine cutting mechanism (90) comprises resilient means (105) for urging said lever means (102) away from the cutting edge (94); and
the friction forces of the moving twine (t) on the notch (107) are operable to pivot said lever means (102) against the forces of the resilient means (105) towards said cutting edge (94).

10. A round baler according to any of the Claims 7 to 9, characterized in that the movable twine guiding means (97, 100, 102) comprise a further guide means (100) for guiding the twine (t) to said lever means (102).

11. A round baler according to Claim 10, when appended to Claim 8 or 9, characterized in that said further guide means (100) guides said twine (t) into said twine receiving notch (107).

12. A round baler according to any of the preceding claims, characterized in that:
said twine cutting mechanism (90) is pivotably attached, either directly or indirectly, to the frame (11); the transferring means of said twine cutting apparatus (47) comprise means (78, 75, 128, 131, 132, 134, 125, 122) for pivoting said twine cutting mechanism (90) from said inoperative position to said operative position; and
said transferring means further comprise means (132, 126, 127, 134, 125, 122) for returning said twine cutting mechanism (90) to said inoperative position after the twine (t) has been severed by said cutting edge (94).

13. A round baler according to Claim 12, characterized in that said returning means (132, 126, 127, 134, 125, 122) comprise:
a drive means (132) having a slot (136) with a detent portion (135) for holding an end a pivot arm (134) of a transverse drive rod (125) drivingly connected to the cutting mechanism (90);
cam means (137, 138) for disengaging said pivot arm (134) from said detent portion (135); and
resilient means (126) for urging the cutting mechanism (90) back to the inoperative position when said pivot arm (134) is disengaged from said detent portion (135) by the action of the cam means (137, 138).

14. A round baler according to Claim 13, characterized in that said pivoting means (78, 75, 128, 131, 132, 134, 125, 122) comprise an actuator means (78), which is drivingly connected to said drive means (132) for pivoting said twine cutting mechanism (90) to the operative position, when said end of said pivot arm (134) is held in said detent portion (135).

15. A round baler according to any of the preceding claims, characterized in that the operation of the twine feeding means (48) and of the operation of the twine cutting means (47) are synchronized.

16. A round baler according to Claim 15, when appended to Claim 14, characterized in that said twine feeding means (48) comprises means (78, 75, 73, 74)
for moving a twine dispensing end (62) between a dispensing start position and a dispensing end position and
comprising the actuator means (78) of said pivoting means (78, 75, 128, 131, 132, 134, 135, 122).

17. A round baler according to any of the preceding claims, characterized in that said cutting edge (94) is held in symmetrical bracket (108), exposing only half of the cutting edge (94) to the twine (t).

## Patentansprüche

1. Rundballenpresse (10) mit
- einem Rahmen (11),
- zwei Seitenwänden (51,52), die an dem Rahmen (11) befestigt sind,
- einer Vielzahl von Ballenformungseinrichtungen (18, 20, 30, 32), die zwischen den Seitenwänden (51, 52) eingebaut sind und zusammen mit diesen eine Ballenformungskammer zur Formung eines zylindrischen Packens aus Erntematerial umgrenzen,
- einer Bindegarn-Handhabungsbaugruppe (47, 48) die in der Nähe einer querverlaufenden Öffnung zwischen zweien der Ballenformungseinrichtungen (18, 30) befestigt ist und folgendes umfaßt:
Einrichtungen (48) zum Zuführen von Bindegarn (t) durch die querverlaufende Öffnung und zum Aufbringen einer Vielzahl von Windungen auf den zylindrischen Packen aus Erntematerial, der in der Ballenkammer geformt wird, und
eine Bindegarn-Schneidvorrichtung (47), die folgendes umfaßt:
- einen Bindegarn-Schneidmechanismus (90) mit einer Schneidkante zum Schneiden des Bindegarns (t) und
- eine Einrichtung zur Überführung des Bindegarn-Schneidmechanismus (47) von einer Ruhestellung in eine Betriebsstellung,
dadurch gekennzeichnet, daß die Überführungseinrichtung für den Bindegarn-Schneidmechanismus (47) Einrichtungen zur Überführung der Schneidkante (94) von einer Ruhestellung, in der sie von der querverlaufenden Öffnung entfernt ist, in einer Betriebsstellung näher an der querverlaufenden Öffnung umfaßt.

2. Rundballenpresse nach Anspruch 1, bei der die Einrichtungen (48) zur Zuführung von Bindegarn (t) zumindest einen Bindegarn-Arm (54) mit einem Bindegarn-Abgabeende (62) einschließen, das zwischen einer Abgabe-Startposition in der Nähe der querverlaufenden Öffnung und einer Abgabe-Endposition benachbart zu einer der Seitenwände (51, 52) beweglich ist, dadurch gekennzeichnet, daß sich der Bindegarn-Schneidmechanismus (90) benachbart zu der einen Seitenwand (51) befindet, wenn er sich in seiner Betriebsstellung befindet.

3. Rundballenpresse nach Anspruch 1 oder 2, dadurch gekennzeichnet, daß die Bindegarn-Schneidvorrichtung (47) eine stationäre Bindegarn-Führungseinrichtung (81, 82) zum Führen des Bindegarns (t) in die Nähe der Schneidkante (94) umfaßt.

4. Rundballenpresse nach Anspruch 3 unter Rückbeziehung auf Anspruch 2, dadurch gekennzeichnet, daß die stationäre Bindegarn-Führungseinrichtung (81, 82) an einer der Seitenwände (51, 52) befestigt ist.

5. Rundballenpresse nach einem der vorhergehenden Ansprüche, dadurch gekennzeichnet, daß der Bindegarn-Schneidmechanismus (90) bewegliche Bindegarn-Führungseinrichtungen (97, 100, 102) zum Führen des Bindegarns (t) zu einer Position benachbart zu der Schneidkante (94) nach der Abgabe einer vorgegebenen Menge des Bindegarns (t) umfaßt.

6. Rundballenpresse nach Anspruch 5 unter Rückbeziehung auf Anspruch 3 oder 4, dadurch gekennzeichnet, daß die bewegliche Bindegarn-Führungseinrichtung (97, 100, 102) das Bindegarn (t) zu der Schneidkante (94) führt, nachdem die stationäre Bindegarn-Führungseinrichtung (81) das Bindegarn (t) zu der Nähe der Schneidkante (94) geführt hat.

7. Rundballenpresse nach Anspruch 5 oder 6, dadurch gekennzeichnet, daß die bewegliche Bindegarn-Führungseinrichtung (97, 100, 102) Hebeleinrichtungen (102) zur Überführung des Bindegarns (t) von einer Position in der Nähe der Schneidkante (94) zu einer Position gegen die Schneidkante (94) umfaßt, um auf diese Weise das Bindegarn (t) zu durchschneiden.

8. Rundballenpresse nach Anspruch 7, dadurch gekennzeichnet, daß die Hebeleinrichtung (102) ein schwenkbares Plattenteil (102) mit einer im wesentlichen horizontalen Bindegarn-Aufnahmenut (107) aufweist.

9. Rundballenpresse nach Anspruch 5, dadurch gekennzeichnet, daß:
der Bindegarn-Schneidmechanismus (90) federnde Einrichtungen (105) zum Vorspannen der Hebeleinrichtung (102) von der Schneidkante (94) fort umfaßt, und
die Reibungskräfte des sich bewegenden Bindegarns (t) auf die Kerbe (107) ein Verschwenken der Hebeleinrichtung (102) gegen die Kräfte der federnden Einrichtung (105) in Richtung auf die Schneidkante (94) bewirken.

10. Rundballenpresse nach einem der Ansprüche 7-9, dadurch gekennzeichnet, daß die beweglichen Bindegarn-Führungseinrichtungen (97, 100, 102) eine weitere Führungseinrichtung (100) zum Führen des Bindegarns (t) zu der Hebeleinrichtung (102) umfassen.

11. Rundballenpresse nach Anspruch 10 unter Rückbeziehung auf Anspruch 8 oder 9, dadurch gekennzeichnet, daß die weitere Führungseinrichtung (100) das Bindegarn (t) in die Bindegarn-Aufnahmenut (107) führt.

12. Rundballenpresse nach einem der vorhergehenden Ansprüche, dadurch gekennzeichnet, daß:
der Bindegarn-Schneidmechanismus (90) schwenkbar entweder direkt oder indirekt an dem Rahmen (11) befestigt ist,
die Überführungseinrichtungen der Bindegarn-Schneidvorrichtung (47) Einrichtungen (78, 75, 128, 131, 132, 134, 125, 122) zum Verschwenken des Bindegarn-Schneidmechanismus (90) von der Ruhestellung in die Betriebsstellung umfassen, und
die Überführungseinrichtungen weiterhin Einrichtungen (132, 126, 127, 134, 125, 122) zur Rückführung des Bindegarn-Schneidmechanismus (90) in die Ruhestellung umfassen, nachdem das Bindegarn (t) von der Schneidkante (94) durchschnitten wurde.

13. Rundballenpresse nach Anspruch 12, dadurch gekennzeichnet, daß die Rückführungseinrichtungen (132, 126, 127, 134, 125, 122) folgendes umfassen:
eine Antriebseinrichtung (132) mit einem Schlitz (136) mit einem Rastabschnitt (135) zum Halten eines Endes eines Schwenkarmes (134) einer sich in Querrichtung erstreckenden Antriebsstange (125) in Antriebsverbindung mit dem Schneidmechanismus (90),
Nockeneinrichtungen (137, 138) zum Ausrücken des Schwenkarmes (134) aus dem Rastabschnitt (135), und
federnde Einrichtungen (126) zum Drücken des Schneidmechanismus (90) zurück in die Ruhestellung, wenn der Schwenkarm (134) aus dem Rastabschnitt (135) durch die Wirkung der Nockeneinrichtung (137, 138) ausgerückt wird.

14. Rundballenpresse nach Anspruch 13, dadurch gekennzeichnet, daß die Schwenkeinrichtungen (78, 75, 128, 131, 132, 134, 125, 122) eine Stellgliedeinrichtung (78) umfassen, die antriebsmäßig mit den Antriebseinrichtungen (132) zum Verschwenken des Bindegarn-Schneidmechanismus (90) in die Betriebsstellung verbunden ist, wenn das Ende des Schwenkarmes (134) in dem Rastabschnitt (135) gehalten ist.

15. Rundballenpresse nach einem der vorhergehenden Ansprüche, dadurch gekennzeichnet, daß die Betriebsweise der Bindegarn-Zuführungseinrichtung (48) und die Betriebsweise der Bindegarn-Schneideinrichtung (47) miteinander synchronisiert sind.

16. Rundballenpresse nach Anspruch 15 unter Rückbeziehung auf Anspruch 14, dadurch gekennzeichnet, daß die Bindegarn-Zuführungseinrichtung (48) Einrichtungen (78, 75, 73, 74) zum Bewegen eines Bindegarn-Abgabeendes (62) zwischen einer Abgabe-Startposition und einer Abgabe-Endposition umfaßt, die die Stellgliedeinrichtung (78) der Schwenkeinrichtungen (78, 75, 128, 131, 132, 134, 135, 122) umfassen.

17. Rundballenpresse nach einem der vorhergehenden Ansprüche, dadurch gekennzeichnet, daß die Schneidkante (94) in einem symmetrischen Haltebügel (108) gehalten ist, der lediglich eine Hälfte der Schneidkante (94) gegenüber dem Bindegarn (t) freilegt.

## Revendications

1. Botteleuse ronde (10) comprenant:
- un châssis (11) ;
- une paire de parois latérales (51 ,52) fixées sur ledit châssis (11);
- une pluralité de moyens de bottelage (18, 20, 30, 32) installés entre lesdites parois latérales (51, 52) et définissant ensemble avec ces dernières une chambre de bottelage pour constituer une balle cylindrique de matériau de récolte;
- un assemblage de manipulation de ficelle (47, 48) monté à proximité d'une ouverture transversale entre deux desdits moyens de bottelage (18, 30) et comprenant:
un moyen (48) d'alimentation de ficelle (t) au travers de ladite ouverture transversale et d'application d'une pluralité d'enroulements sur la balle cylindrique de matériau de récolte formée dans ladite chambre de bottelage; et
un appareil (47) de coupe de ficelle comprenant:
- un mécanisme de coupe de ficelle (90) possédant un bord de coupe (94) pour sectionner la ficelle (t); et
- un moyen de transfert dudit mécanisme (47) de coupe de ficelle depuis une position de repos vers une position de fonctionnement;
caractérisée en ce que ledit moyen de transfert dudit mécanisme de coupe (47) comprend un moyen destiné à transférer ledit bord de coupe (94) d'une position de repos écartée de ladite ouverture transversale, vers une position de fonctionnement plus proche de ladite ouverture transversale.

2. Botteleuse ronde selon la revendication 1 et dans laquelle lesdits moyens (48) d'alimentation de ficelle (t) comprennent au moins un bras de ficelage (54) possédant une extrémité de distribution (62) de ficelle pouvant se déplacer entre une position initiale de distribution à proximité de ladite ouverture transversale et une position finale de distribution près de l'une desdites parois latérales (51, 52),
caractérisée en ce que ledit mécanisme de coupe (90) de ficelle est proche de ladite paroi latérale (51), lorsqu'il se trouve en position de fonctionnement.

3. Botteleuse ronde selon la revendication 1 ou 2, caractérisée en ce que ledit appareil de coupe (47) de ficelle comprend des moyens stationnaires de guidage (81, 82) de ficelle afin de guider ladite ficelle (t) à proximité dudit bord de coupe (94).

4. Botteleuse ronde selon la revendication 3, lorsqu'elle se rapporte à la revendication 2,
caractérisée en ce que lesdits moyens stationnaires de guidage (81, 82) sont fixés à l'une desdites parois latérales (51, 52).

5. Botteleuse ronde selon l'une quelconque des revendications précédentes, caractérisée en ce que ledit mécanisme de coupe (90) de ficelle comprend des moyens mobiles de guidage (97, 100, 102) de ficelle afin de guider ladite ficelle (t) vers une position proche dudit bord de coupe (94) après la distribution d'une quantité prédéterminée de ficelle (t).

6. Botteleuse ronde selon la revendication 5, lorsqu'elle se rapporte à la revendication 3 ou 4, caractérisée en ce que lesdits moyens mobiles de guidage (97, 100, 102) de ficelle guident la ficelle (t) vers ledit bord de coupe (94) après que lesdits moyens stationnaires de guidage (81) de ficelle ont guidé la ficelle (t) à proximité du bord de coupe (94).

7. Botteleuse ronde selon la revendication 5 ou 6, caractérisée en ce que lesdits moyens mobiles de guidage (97, 100, 102) de ficelle comprennent un moyen de levier (102) pour transférer la ficelle (t) d'une position à proximité du bord de coupe (94) vers une position contre ledit bord de coupe (94) afin de sectionner ainsi ladite ficelle (t).

8. Botteleuse ronde selon la revendication 7, caractérisée en ce que ledit moyen de levier (102) comprend un organe de plaque pivotante (102) pourvu d'une encoche substantiellement horizontale de réception (107) de ficelle.

9. Botteleuse ronde selon la revendication 8, caractérisée en ce que:
le mécanisme de coupe (90) de ficelle comprend un moyen élastique (105) pour contraindre ledit moyen de levier (102) à l'écart du bord de coupe (94); et
les forces de friction de la ficelle mobile (t) sur l'encoche (107) agissent pour faire pivoter ledit moyen de levier (102) à l'opposé des forces du moyen élastique (105), vers ledit bord de coupe (94).

10. Botteleuse ronde selon l'une quelconque des revendications 7 à 9, caractérisée en ce que les moyens mobiles de guidage (97, 100, 102) de ficelle comprennent un moyen supplémentaire de guidage (100) afin de guider la ficelle (t) vers ledit moyen de levier (102).

11. Botteleuse ronde selon la revendication 10, lorsqu'elle se rapporte à la revendication 8 ou 9, caractérisée en ce que ledit moyen supplémentaire de guidage (100) guide ladite ficelle (t) dans ladite encoche de réception (107) de ficelle.

12. Botteleuse ronde selon l'une quelconque des revendications précédentes, caractérisée en ce que:
ledit mécanisme de coupe (90) de ficelle est fixé avec pivotement, soit directement soit indirectement, au châssis (11);
le moyen de transfert dudit appareil de coupe (47) de ficelle comprend des moyens (78, 75, 128, 131, 132, 134, 125, 122) destinés à faire pivoter ledit mécanisme de coupe (90) de ficelle, depuis ladite position de repos vers ladite position de fonctionnement; et
ledit moyen de transfert comprend en outre des moyens (132, 126, 127, 134, 125, 122) destinés à faire retourner ledit mécanisme de coupe (90) de ficelle vers ladite position de repos après le sectionnement de la ficelle (t) par ledit bord de coupe (94).

13. Botteleuse ronde selon la revendication 12, caractérisée en ce que lesdits moyens de retour (132, 126, 127, 134, 125, 122) comprennent:
un moyen d'entraînement (132) possédant une rainure (136) avec une portion d'arrêt (135) destinée à maintenir une extrémité d'un bras pivotant (134) d'une barre transversale d'entraînement (125) accouplée fonctionnellement au mécanisme de coupe (90);
un moyen de came (137, 138) destiné à dégager ledit bras pivotant (134) hors de la portion d'arrêt (135); et
un moyen élastique (126) destiné à contraindre le mécanisme de coupe (90) pour le ramener vers la position de repos lorsque ledit bras pivotant (134) est dégagé de la portion d'arrêt (135) sous l'action du moyen de came (137, 138).

14. Botteleuse ronde selon la revendication 13, caractérisée en ce que lesdits moyens de pivotement (78, 75, 128, 131, 132, 134, 125, 122) comprennent un moyen d'actionneur (78) accouplé fonctionnellement audit moyen d'entraînement (132) afin de faire pivoter ledit mécanisme de coupe (90) vers la position de fonctionnement lorsque ladite extrémité du bras de pivotement (134) est maintenue dans ladite portion d'arrêt (135).

15. Botteleuse ronde selon l'une quelconque des revendications précédentes, caractérisée en ce que le fonctionnement du moyen d'alimentation (48) de ficelle et le fonctionnement du moyen de coupe (47) de ficelle sont synchronisés.

16. Botteleuse ronde selon la revendication 15, lorsqu'elle se rapporte à la revendication 14, caractérisée en ce que ledit moyen d'alimentation (48) de ficelle comprend des moyens (78, 75, 73, 74)
destinés à déplacer une extrémité de distribution (62) de ficelle entre une position initiale de distribution et une position finale de distribution; et
comprenant le moyen d'actionneur (78) desdits moyens de pivotement (78, 75, 128, 131, 132, 134, 135, 122).

17. Botteleuse ronde selon l'une quelconque des revendications précédentes, caractérisée en ce que ledit bord de coupe (94) est maintenu dans un support symétrique (108), soumettant seulement une moitié du bord de coupe (94) à la ficelle (t).
